# EUROPEAN PATENT SPECIFICATION

(11) **EP 2 162 015 B1**
(45) Date of publication and mention of the grant of the patent: **26.12.2012**
(21) Application number: 08756933.1
(22) Date of filing: 13.06.2008
(51) Int. Cl.: A23K 1/14

(54) **MEAT ANALOGUE WITH EXTERNAL TEXTURE**
FLEISCHANALOG MIT ÄUSSERLICHER TEXTUR
ANALOGUE DE VIANDE À TEXTURE EXTERNE

(30) Priority: 13.06.2007 AU 2007903168 P
(43) Date of publication of application: 17.03.2010
(73) Proprietor: Mars Incorporated, McLean, VA 22101-3883 (US)
(72) Inventor: REDMAN, Andrew, Jason, Rutherglen, VIC 3685 (AU)
(74) Representative: Cornish, Kristina Victoria Joy
(86) International application number: PCT/AU2008/000853
(87) International publication number: WO 2008/151381

(56) References cited:
- EP-A1- 0 262 276
- EP-A1- 1 014 806
- WO-A1-01/47370
- US-A- 4 031 267
- US-A- 4 190 679
- US-A- 4 418 086
- US-A- 5 290 584
- US-A1- 2005 042 330
- US-B1- 6 635 301
- PATENT ABSTRACTS OF JAPAN & JP 2005 304392 A (THE JAPAN STEEL WORKS LTD) 04 November 2005

## Description

### FIELD OF THE INVENTION

The invention relates to the field of commercial manufacture of meat analogue products. In particular, the invention relates to an improved method for manufacturing relatively low cost carbohydrate based meat analogues having an external texture resembling real meat, and to analogues made thereby.

### BACKGROUND OF THE INVENTION

A continuing challenge for the manufacturers of commercial pet food products is to provide food for the animal which has sufficient visual appeal to the pet owner to satisfy the owner's need to feel that they are providing their pet with a wholesome and appetising meal. This is not a straightforward task, as the raw materials available to the pet food manufacturer are typically of lower quality than human grade materials, in order to ensure that the manufacturer is able to provide the meal at a competitive price point.

Thus, the pet food manufacturer seeks, particularly in the context of dog or cat food, to produce meat analogue chunks, which mimic the appearance of premium meat, from low cost raw materials, typically protein-rich materials such as meat offcuts and organs, for which there are a number of possible processes.

However, where the pet food product is aimed at the very 'budget conscious' segment of the market, who are characterised by selection of lower-cost pet foods formulations, the pet food manufacturer is obliged to minimise the inclusion of meat or other protein-rich materials, in favour of plant or cereal materials in order to further minimise the formulation cost of the food.

This presents a further challenge to the pet food manufacturer, as it is typically more difficult to make low-protein materials resemble meat products. One approach taken in the past involves the extrusion cooking of a mixture of cereal proteins, such as soy protein or wheat gluten, which produces a striated internal texture in the extrudate. When cut open, the internal texture bears a resemblance to muscle meat.

However, as this extrudate needs to be cut open in order to actually reveal the 'meaty' texture, there remains a need to produce a relatively low-protein meat analogue chunk which has a greater resemblance to muscle meat at its external surface, so that its 'real food' appearance is evident to the pet owner immediately upon opening the package, and without obliging the pet owner to manipulate the food unduly, which they would be unlikely to do. Furthermore, the need to use functional protein to create the internal texturization results in meat analogues with higher raw material costs.

US-A-4,031,267 discloses an expanded protein product made by extruding a mix containing a proteinaceous material, an animal or vegetable fat, a non-proteinaceous and non-farinaceous filler, sulfur and/or sulfur compound and water from a high pressure zone to a low pressure zone.

US-A-4,418,086 discloses an expanded protein product with a protein made by extruding a mix containing a proteinaceous material, an animal or vegetable fat, a non-proteinaceous and non-farinaceous extrusion agent, sulfur and/or sulfur compound, plasticizers and water from a high pressure zone to a low pressure zone.

US-A- 4,190,679 discloses a textured pet food in the form of low-intermediate moisture meat like chunks.

US-A-5,290,584 discloses a method of preparing and producing a nutritious, low calorie, low cholesterol, shelf-stable, expanded snack food product for humans and pets and the process of making such product.

WO99/13735 discloses a food product comprising continuous aligned bundles of formed fibers extending between faces of the food product and method for its production.

It is an object of the present invention to provide a relatively low-protein pet food component having an external appearance more closely resembling muscle meat than those of the prior art.

### SUMMARY OF THE INVENTION

According to one aspect of the invention, there is provided a method of manufacturing a meat analogue, said method including the steps of:
mixing constituent materials, said materials containing between about 5% and about 40% protein by mass;
feeding said mixture into an extrusion cooker having extrusion orifices of a known cross-sectional area;
processing said mixture in said extrusion cooker to a predetermined temperature and pressure, said temperature and pressure selected to cause said processed mixture to expand to at least twice the cross-sectional area of said extrusion orifice;
extruding said mixture from said cooker via extrusion orifices into ambient temperature and pressure, whereupon the cross-sectional area of the extruded material (extrudate) expands to at least twice the cross-sectional area of said extrusion orifices;
holding the extrudate at ambient temperature and pressure conditions, thereby facilitating the formation of a 'skin' on the outer surface of the extrudate, and contraction of the cross-sectional area of the extrudate, thereby to cause said 'skin' to wrinkle in a manner which resembles the appearance of cooked muscle meat. It is thought that this 'skin' may be formed as a result of a propensity of the protein in the formulation to tend to agglomerate at the surface of the piece, as a result of this process.

Preferably, the protein content of said materials is between about 10% and about 30% by mass.

Preferably, a compressive force is applied to the extrudate following contraction of said extrudate upon cooling, thereby to enhance to formation of said wrinkled appearance of the 'skin'. This may include cutting the extrudate via any of the extrudate cutting techniques well-known in the art.

In addition, or alternatively, the external texturisation of the extrudate may be enhanced by crimping the extrudate following contraction and compression of said extrudate upon cooling. The crimping force may be applied by compressive rollers, by vacuum shrinking or by any other suitable means.

Best results have been observed where pressure and temperature conditions in the extrusion cooker are selected to cause said processed mixture to expand to between twice and three times the cross-sectional area of said extrusion orifices.

Advantageously, said constituent materials contain between about 15% and about 25% protein by mass and between about 55% and about 65% cereal by mass. A well-performing formulation of said constituent materials includes about 62% cereal; about 25% emulsified meat or meat by-product; and about 8% humectant. Preferred sources of the protein are comminuted liver, poultry viscera and beef hearts.

The constituent materials may contain carbohydrate materials derived from rice.

In another aspect of the invention, there is provided a meat analogue product produced by any method as defined above.

In another aspect of the invention, there is provided a meat analogue product containing between about 5% and about 40% protein by mass, and having an outer surface which has a wrinkled appearance, wherein the bulk of the mass of the analogue consists substantially of a matrix of starch and protein, and wherein the surface of the analogue has a higher proportion of protein than is present in the centre of the analogue. The starch may be derived from rice. This is the physical structure which is associated with analogues produced by the method described above.

Now will be described, with reference to the figures, a specific, preferred but nonlimiting embodiment of the invention.

### BRIEF DESCRIPTION OF THE DRAWINGS

Figure 1 is a photograph of an extrusion cooker nozzle which may be employed to extrude the low-protein materials which forms the chunk according to the invention.
Figure 2 is an alternative view of the nozzle shown in figure 1.
Figure 3 is a photograph of a number of relatively low-protein meat analogue chunks according to the invention.

### DETAILED DESCRIPTION OF A PREFERRED EMBODIMENT

The present invention is herein exemplified by the following process and the resulting product.

The fundamental processes employed are well known to persons skilled in the art. The invention resides in the particulars of the formulation to produce a relatively low-protein meat analogue product suitable for inclusion in a pet food product, and in the process conditions and equipment settings chosen to produce that product.

The formulation of the raw materials is summarised below in table 1.

**Table 1.**

| **Component** | **% by Mass** |
|---|---|
| Rice | 66.66 |
| Liver | 19.05 |
| Glycerol | 7.62 |
| Salt | 3.33 |
| Vegetable Oil | 1.91 |
| Potassium Chloride | 0.95 |
| Potassium Sorbate | 0.27 |
| Citric Acid | 0.10 |
| Red Colour | 0.09 |
| Antioxidant | 0.02 |

The liver is prepared by grinding through a 3mm holeplate. The liver provides a particular advantage in the formulation in that it provides the structure for the heated steam and gas inside the extrudate to remain inside the extrudate as it exits the extrusion cooker, and does not tend to flash off upon exiting the die plate. Rice has been found to provide a particularly good source of carbohydrate.

All of the materials are then blended in a ribbon blender or equivalent mixer and transferred to the feed hopper of the extrusion cooker.

In this case the extrusion cooker used is a Werner and Pfleiderer C58 twin screw extruder. The screw profile is outlined in table 2 below.

**Table 2.**

| **Number of Screw Elements** | **Element Length (mm)** | **Direction** | **Type** | **Cumulative Length (mm)** |
|---|---|---|---|---|
| 19 | 75 | Forward | Convey | 1425 |
| 2 | 15 | Forward | Convey | 1455 |
| 1 | 15 | Reverse | Convey | 1470 |
| 2 | 75 | Forward | Convey | 1620 |
| 1 | 15 | Forward | Convey | 1635 |
| 1 | 15 | Reverse | Convey | 1650 |
| 2 | 75 | Forward | Convey | 1800 |
| 1 | 15 | Forward | Convey | 1815 |
| 1 | 15 | Reverse | Convey | 1830 |
| 1 | 75 | Forward | Convey | 1905 |
| 1 | 58 | Forward | Kneading | 1963 |
| 1 | 58 | Reverse | Kneading | 2021 |
| 1 | 43 | Forward | Convey | 2064 |
| 1 | 15 | Reverse | Convey | 2079 |
| 1 | 43 | Forward | Convey | 2122 |
| 1 | 15 | Reverse | Convey | 2137 |
| 1 | 43 | Forward | Convey | 2180 |
| 1 | 15 | Reverse | Convey | 2195 |
| 2 | 75 | Forward | Convey | 2345 |
| 2. | 36 | Forward | Comp | 2417 |

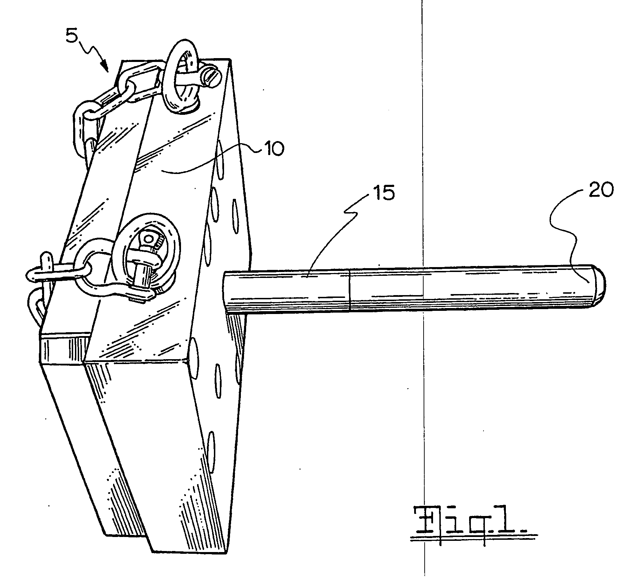

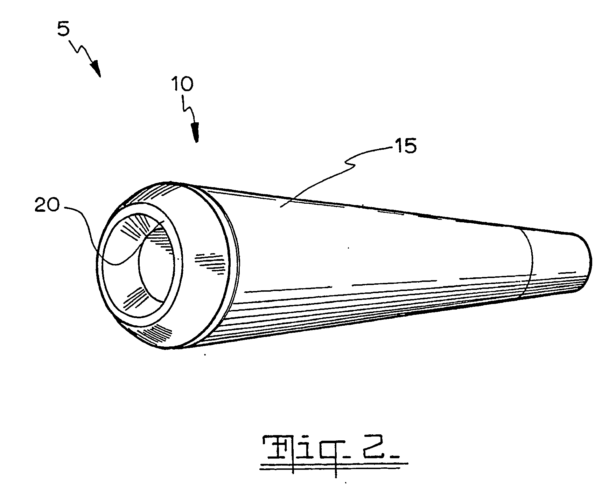

The die plate used in this particular example is illustrated in figures 1 and 2. The die plate 5 includes a heavy steel plate 10, which is affixed to the outlet of the extruder (not shown). It includes a single circular hole with a 10mm diameter, through which the pressurised extrudate passes into an elongate tubular nozzle 15. The 10mm internal diameter is maintained throughout the nozzle 15, which ends with a 10mm orifice 20, from which the extrudate emerges.

It is to be understood that the precise dimensions of the die plate orifices are not critical *per se* to the working of the invention.

Typical running conditions for the extrusion cooker are summarised below in table 3.

**Table 3.**

| | |
|---|---|
| Mass Feed Rate | 30 -200 kg/hr |
| Barrel 8 Temperature | 40 - 60°C |
| Barrel 9 Temperature | 50 - 80°C |
| Barrel 10 Temperature | 40 - 70°C |
| Screw speed | 200 - 500 rpm |
| Screw Torque | 70 - 90 Nm |
| Barrel Pressure | 19.4 Bar |
| Specific Mechanical Energy | 180 - 220 kWh/kg |
| Final Barrel Temperature | >110°C |
| Cooling water | Chilled water to Barrel 10 |

These conditions will cause the starch in the rice to gelatinise in the extruder barrel, which is critical to the formation of a coherent extrudate, given the relatively low protein content.

This produces an extrudate which expands to a cross-sectional area of approximately 2 to 3 times the cross-sectional area of the die plate orifice 20. Upon coming into contact with the ambient air a 'skin' is formed at the outer surface of the extrudate, due to retrogradation of the gelatinised starch and to the action of the liver protein in the extrudate structure.

As the extrudate cools in ambient conditions, the heated gas and steam remains inside the extrudate and expansion recedes due to cooling of the expanded gases inside the extrudate. However, as the skin has formed at the surface, the surface cannot contract. This forces the skin to crease and 'wrinkle'. This wrinkling effect produces the desired 'meat-like' appearance on the outer surface of the extrudate.

Typically, the extrudate would be cut to length at this point in the process, by using any one of a number of extrudate cutting techniques well known In the art, e.g. rotating knives.

Alternatively, the wrinkling effect may be enhanced by further processing. For example, the extrudate rope, while cooling, may be passed through cooperating crimping rollers, which may have uneven surfaces. This would produce uneven crushing of the cooling extrudate, which contributes to the production of the 'meat-like' appearance of the meat analogue.

Other such processes may be employed to enhance the wrinkling effect, such as vacuum shrinking.

Microscopy studies carried out on the structure of the internal and 'skin layer' of the analogue indicate that the analogue is made up substantially of a matrix of protein fat and starch. In particular, it has been observed that the concentration of agglomerated proteins, as well as fat, tends to be more higher at the skin layer than is found In the central or bulk of the analogue mass. It is theorlsed that this concentration of the proteins in particular at the surface or skin contributes to the particularly 'authentic' surface appearance of the extrudate.

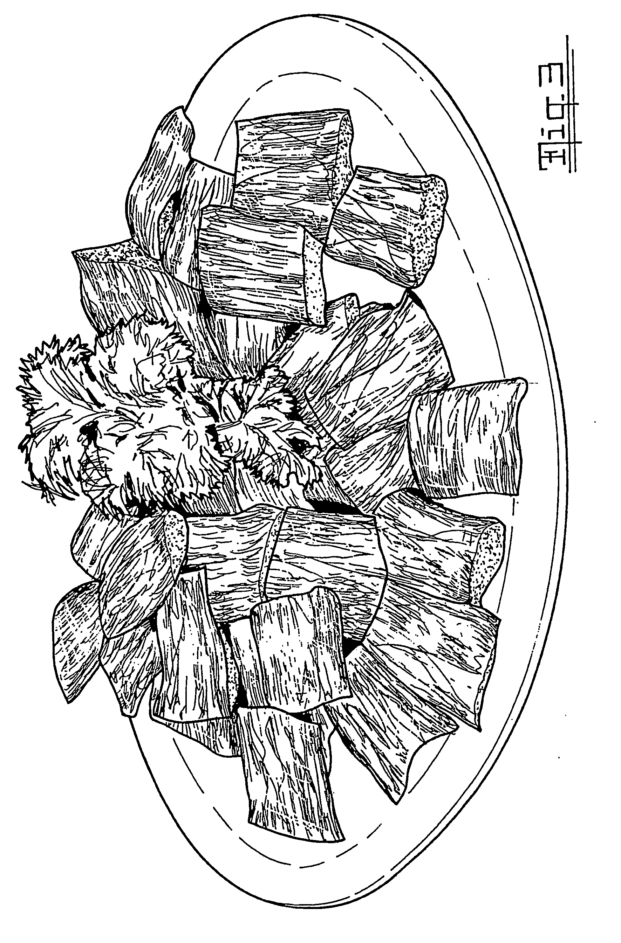

As illustrated In figure 3, the final meat analogue chunks produced according to the above process have a very 'meaty' looking outer appearance, which makes them highly aesthetically suitable for inclusion in a commercial prepared pet food.

The foregoing example is merely one way in which the inventive concept can be applied.

## Claims

1. A method of manufacturing a meat analogue, said method including the steps of:
mixing constituent materials, said materials containing between about 5% and about 40% protein by mass
feeding said mixture into an extrusion cooker having extrusion orifices of a known cross-sectional area;
processing said mixture in said extrusion cooker to a predetermined temperature and pressure selected to cause said processed mixture to expand to at least twice the cross-sectional area of said extrusion orifices;
extruding said mixture from said cooker via said extrusion orifices into ambient temperature and pressure, whereupon the cross-sectional area of the extruded material (extrudate) expands to at least twice the cross-sectional area of said extrusion orifices;
holding the extrudate at ambient temperature and pressure conditions, thereby facilitating the formation of a 'skin' on the outer surface of the extrudate, and facilitating contraction of the cross-sectional area of the extrudate, thereby to cause said 'skin' to wrinkle in a manner which resembles the appearance of cooked muscle meat.

2. The method of claim 1, wherein the constituent materials further comprise starch.

3. The method of claim 1 or claim 2, further including the step of applying a compressive force to the extrudate following contraction of said extrudate upon cooling, thereby to enhance the formation of said wrinkled appearance of the 'skin'.

4. The method of claims 1 to 3, further including the step of crimping the extrudate following contraction and compression of said extrudate upon cooling.

5. The method of claim 3 or 4, wherein said compressive force is applied by compressive rollers.

6. The method of any preceding claim, wherein said pressure and temperature conditions in the extrusion cooker are selected to cause said processed mixture to expand to between twice and three times the cross-sectional area of said extrusion orifices.

7. The method of any preceding claim, wherein the protein content of said materials is between 10% and 30% by mass.

8. The method of any preceding claim, wherein said constituent materials contain between 15% and 25% protein by mass.

9. The method of claim 8, wherein the protein is substantially provided by one or more materials selected from the group consisting of comminuted liver, poultry viscera and beef hearts.

10. The method of claim 8, wherein said constituent materials contain between 55% and 65% cereal by mass.

11. The method of claim 8, wherein said constituent materials contain 62% cereal; 25% emulsified meat or meat by-product; and 8% humectant.

12. The method of any preceding claim wherein said constituents contain carbohydrate materials derived from rice.

13. A meat analogue product obtainable by the method as defined in any one of claims 1 to obtainable 12.

14. A meat analogue product of claim 13, wherein the bulk of the mass of the analogue consists substantially of a matrix of starch and protein, and the surface of the analogue has a higher proportion of protein than is present in the centre of the analogue.

15. The meat analogue product of claim 14, wherein the starch is derived from rice.

## Patentansprüche

1. Verfahren zur Herstellung eines Fleischanalogs, wobei das Verfahren die Schritte einschließt:
Vermischen konstituierender Materialien, wobei die Materialien zwischen etwa 5 und etwa 40 Masse-% Protein enthalten;
Zuführen der Mischung zu einem Extrusionskocher mit Extrusionsöffnungen einer bekannten Querschnittsfläche;
Verarbeiten der Mischung im Extrusionskocher auf eine vorbestimmte Temperatur und einen vorbestimmten Druck, die so ausgewählt sind, dass bewirkt wird, dass die verarbeitete Mischung auf wenigstens das Zweifache der Querschnittsfläche der Extrusionsöffnungen expandiert;
Extrudieren der Mischung aus dem Kocher über die Extrusionsöffnungen in Umgebungstemperatur und -druck hinein, woraufhin die Querschnittsfläche des extrudierten Materials (Extrudats) auf wenigstens das Zweifache der Querschnittsfläche der Extrusionsöffnungen expandiert;
Halten des Extrudats bei Umgebungstemperatur- und -druckbedingungen, wodurch die Bildung einer "Haut" auf der Außenfläche des Extrudats erleichtert wird und die Kontraktion der Querschnittsfläche des Extrudats erleichtert wird, wodurch bewirkt wird, dass die "Haut" sich in einer Weise kräuselt, die dem Aussehen von gekochtem Muskelfleisch ähnelt.

2. Verfahren nach Anspruch 1, wobei die konstituierenden Materialien weiter Stärke umfassen.

3. Verfahren nach Anspruch 1 oder Anspruch 2, das weiter den Schritt des Beaufschlagens des Extrudats mit Kompressionskraft im Anschluss an die Kontraktion des Extrudats bei Abkühlung einschließt, wodurch die Bildung des gekräuselten Aussehens der "Haut" verstärkt wird.

4. Verfahren nach den Ansprüchen 1 bis 3, das weiter den Schritt des Kräuselns des Extrudats im Anschluss an die Kontraktion und Kompression des Extrudats bei Abkühlung einschließt.

5. Verfahren nach Anspruch 3 oder 4, wobei die Kompressionskraft durch Kompressionswalzen aufgebracht wird.

6. Verfahren nach einem vorangehenden Anspruch, wobei die Druck- und Temperaturbedingungen im Extrusionskocher ausgewählt sind, um zu bewirken, dass die verarbeitete Mischung auf zwischen das Zwei- und Dreifache der Querschnittsfläche der Extrusionsöffnungen expandiert.

7. Verfahren nach einem vorangehenden Anspruch, wobei der Proteingehalt der Materialien zwischen 10 und 30 Masse-% liegt.

8. Verfahren nach einem vorangehenden Anspruch, wobei die konstituierenden Materialien zwischen 15 und 25 Masse-% Protein enthalten.

9. Verfahren nach Anspruch 8, wobei das Protein im Wesentlichen durch ein oder mehrere Materialien bereitgestellt wird, die ausgewählt sind aus der Gruppe, bestehend aus zerkleinerter Leber, Geflügelviscera und Rinderherzen.

10. Verfahren nach Anspruch 8, wobei die konstituierenden Materialien zwischen 55 und 65 Masse-% Cerealien enthalten.

11. Verfahren nach Anspruch 1, wobei die konstituierenden Materialien 62% Cerealien; 25% emulgiertes Fleisch oder Fleischnebenprodukt; und 8% Feuchthaltemittel enthalten.

12. Verfahren nach einem vorangehenden Anspruch, wobei die Konstituierenden Kohlehydratmaterialien enthalten, die aus Reis gewonnen sind.

13. Fleischanalogprodukt, erhältlich mit dem Verfahren, wie definiert in einem der Ansprüche 1 bis 12.

14. Fleischanalogprodukt nach Anspruch 13, wobei der Großteil der Masse des Analogs im Wesentlichen aus einer Matrix aus Stärke und Protein besteht und die Oberfläche des Analogs einen höheren Anteil an Protein aufweist, als in der Mitte des Analogs vorhanden ist.

15. Fleischanalogprodukt nach Anspruch 14, wobei die Stärke aus Reis gewonnen ist.

## Revendications

1. Un procédé de fabrication d'un produit analogue à de la viande, ledit procédé comprenant les étapes consistant à:.
- mélanger les matériaux constituants, lesdits matériaux contenant entre environ 5% et environ 40% en masse de protéine,
- introduire ledit mélange dans un cuiseur-extrudeur comportant des orifices d'extrusion présentant une section transversale de surface définie,
- traiter ledit mélange dans ledit cuiseur-extrudeur à une température et une pression prédéterminées et sélectionnées pour pouvoir provoquer l'expansion du matériau traité d'au moins deux fois la surface de la section transversale desdits orifices d'extrusion;
- extruder ledit mélange provenant dudit cuiseur à travers des orifices d'extrusion à température et pression ambiantes, de sorte à provoquer l'expansion de la surface de la section transversale de la matière extrudée (extrudat) d'au moins deux fois celle de la surface de la section transversale desdits orifices d'extrusion;
- maintien de l'extrudat aux conditions de pression et de température ambiantes. de façon à faciliter la formation d'une "peau" sur la surface externe de l'extrudat, et à faciliter la contraction de la surface de la section transversale de l'extrudat, et ainsi obtenir que ladite "peau" se ride d'une manière à ressembler à l'aspect d'une chair produite par la cuisson d'une masse musculaire.

2. Le procédé selon la revendication 1, dans lequel les matériaux constituants comprennent en outre de l'amidon.

3. Le procédé selon la revendication 1 ou la revendication 2, comprenant en outre l'étape consistant à appliquer une force de compression à l'extrudat après la contraction dudit extrudat après refroidissement, de façon à améliorer la formation dudit aspect plissé de la "peau".

4. Le procédé selon une quelconque des revendications 1 à 3, comprenant en outre l'étape de crêpage de l'extrudat après la contraction et de la compression dudit extrudat lors du refroidissement.

5. Le procédé selon la revendication 3 ou 4, dans lequel ladite force de compression est appliquée par des rouleaux de compression.

6. Le procédé selon l'une quelconque des revendications précédentes, dans lequel lesdites conditions de pression et de température du cuiseur-extrudeur sont choisies pour que se produise dans ledit mélange traité une expansion de l'ordre de deux à trois fois celle de la surface de la section transversale desdits orifices d'extrusion.

7. Le procédé selon l'une quelconque des revendications précédentes, dans lequel la teneur en protéines de ces matériaux est comprise entre 10% et 30% en masse.

8. Le procédé selon l'une quelconque des revendications précédentes, dans lequel lesdits matériaux constituants contiennent entre 15% et 25% en masse de protéine.

9. Le procédé selon la revendication 8, dans lequel la protéine est sensiblement fournie par un ou plusieurs matériaux choisis dans le groupe constitué par le foie broyé, les viscères de volailles et les coeurs de boeuf.

10. Le procédé selon la revendication 8, dans lequel lesdits matériaux constituants contiennent entre 55% et 65% en masse de céréales.

11. Le procédé selon la revendication 8, dans lequel lesdits matériaux constituants contiennent 62% de céréales, 25% de viande émulsifiée ou sous-produits carnés et 8% d'humectant.

12. Le procédé selon une quelconque des revendications précédentes, dans lequel lesdits constituants contiennent des hydrates de carbone obtenus à partir de riz.

13. Un produit analogue à de la viande susceptible d'être obtenu par le procédé tel que défini dans l'une quelconque des revendications 1 à 12.

14. Un produit analogue à de la viande selon la revendication 13, dans lequel la plus grande partie de la masse du produit analogue à de la viande se compose essentiellement d'une matrice d'amidon et de protéines, et dans lequel la surface du produit analogue contient une proportion plus élevée de protéines que celle de la masse centrale du produit.

15. Un produit analogue à de la viande selon la revendication 14, dans lequel l'amidon est obtenu à partir de riz.
